(19) Europäisches Patentamt / European Patent Office / Office européen des brevets

(11) **EP 4 679 337 A1**

(12) **EUROPEAN PATENT APPLICATION**
published in accordance with Art. 153(4) EPC

(43) Date of publication:
**14.01.2026 Bulletin 2026/03**

(21) Application number: **23927332.9**

(22) Date of filing: **10.03.2023**

(51) International Patent Classification (IPC):
***G06N 10/70*** *(2022.01)*

(52) Cooperative Patent Classification (CPC):
**G06N 10/70**

(86) International application number:
**PCT/JP2023/009447**

(87) International publication number:
**WO 2024/189708 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED
Kawasaki-shi, Kanagawa 211-8588 (JP)**

(72) Inventor: **KATSUDA, Mitsuki
Kawasaki-shi, Kanagawa 211-8588 (JP)**

(74) Representative: **Haseltine Lake Kempner LLP
Cheapside House
138 Cheapside
London EC2V 6BJ (GB)**

(54) **INFORMATION PROCESSING PROGRAM, INFORMATION PROCESSING DEVICE, AND INFORMATION PROCESSING METHOD**

(57) In quantum error correction, under the condition where the relation of connection and the edge weighting in the decoder graph used for error estimation are not yet optimized, the error correction performance deteriorates due to occurrence of the false estimation of the quantum error having occurred. An information processing program causes a computer to perform processing including: calculating, based on a measurement result from a surface code including quantum bits in error correction of a quantum computer, probabilities of error occurrence in the quantum bits; selecting a probability of error occurrence proportional to magnitude of noise generated in the quantum computer, from the probabilities of error occurrence; and generating a decoder graph that is a weighted graph based on the surface code, based on the selected probability of error occurrence. As a result, the error correction performance can be improved in the quantum error correction.

FIG.18

## Description

Technical Field

The present invention relates to an information processing program, an information processing apparatus, and an information processing method for performing quantum error correction by a quantum computer.

Background Art

A quantum computer is too vulnerable to environmental noises to perform large-scale computation if no countermeasures are taken. In order for the quantum computer to have tolerance to such noises, there is a technique of redundantizing quantum information using a plurality of physical quantum bits, for example.

A quantum error occurs in the physical quantum bits used for redundantizing the quantum information in some cases, and processing of detection and correction on the quantum error is performed without measuring (corrupting) written quantum information, namely, quantum error correction is performed. Such quantum error correction is also referred to as quantum fault correction.

Quantum error correction by redundantly encoding quantum information is referred to as a quantum error correction code, and a surface code has recently drawn attention because of its higher error correction performance and its ease implement.

Citation List

Patent Literature

Patent Literature 1: Japanese Laid-Open Patent Publication No. 2022-069525
Patent Literature 2: Japanese National Publication of International Patent Application No. 2022-532469
Patent Literature 3: U.S. Patent Application Publication No. 2019/0044543
Patent Literature 4: U.S. Patent Application Publication No. 2022/0207406

Summary of invention

Technical Problem

However, in quantum error correction, under the conditions where the relation of connection and the edge weighting in the decoder graph used for error estimation are not yet optimized, the error correction performance deteriorates due to occurrence of the false estimation of the quantum error having occurred.

An object in one aspect is to improve the error correction performance in quantum error correction.

Solution to Problem

According to an aspect of an embodiment, a non-transitory computer-readable recording medium stores therein a information processing program that causes a computer to execute a process. The process includes calculating, based on a measurement result from a surface code including quantum bits in error correction of a quantum computer, probabilities of error occurrence in the quantum bits; selecting a probability of error occurrence proportional to magnitude of noise generated in the quantum computer, from the probabilities of error occurrence; and generating a decoder graph that is a weighted graph based on the surface code, based on the selected probability of error occurrence.

Advantageous Effects of Invention

According to the one aspect, the error correction performance in quantum error correction can be improved.

Brief Description of Drawings

FIG. 1 illustrates an exemplary configuration of a surface code.

FIG. 2 illustrates an exemplary syndrome measurement circuit.

FIG. 3 explanatorily illustrates a quantum error estimation using a decoder graph.

FIG. 4 illustrates an exemplary case of error occurrence in a measurement quantum bit.

FIG. 5 explanatorily illustrates false estimation of a quantum error.

FIG. 6 illustrates an example (1) of a method of coping with the false estimation of the quantum error.

FIG. 7 illustrates an example (2) of the method of coping with the false estimation of the quantum error.

FIG. 8 explanatorily illustrates a quantum error detection during measurement (1).

FIG. 9 explanatorily illustrates a quantum error detection during measurement (2).

FIG. 10 explanatorily illustrates a hook error.

FIG. 11 illustrates the successful example and the failure example of quantum error correction using an existing technique 1.

FIG. 12 explanatorily illustrates the calculation of the probability of error occurrence $p_{ij}$.

FIG. 13 explanatorily illustrates the calculation of probability of independent inversion of a syndrome in contact with an open boundary.

FIG. 14 is a graph indicating an exemplary calculation result of the probability of error occurrence using an existing technique 2.

FIG. 15 is the configuration diagram of an information processing apparatus 10 according to the present embodiment.

FIG. 16 illustrates an exemplary construction of the correspondence relation between an edge and a correction-target data quantum bit on a decoder graph.

FIG. 17 is a flowchart illustrating an exemplary flow of quantum error correction processing according to the present embodiment.

FIG. 18 is a flowchart illustrating an exemplary flow of decoder graph generation processing according to the present embodiment.

FIG. 19 is a flowchart illustrating an exemplary flow of measurement sampling processing according to the present embodiment.

FIG. 20 is a diagram illustrating an exemplary hardware configuration of the information processing apparatus 10 according to the present embodiment. Description of Embodiments

Hereinafter, the practical examples of an information processing program, an information processing apparatus, and an information processing method according to the present embodiment will be described in detail with reference to the drawings. The present embodiment is not limited to the practical examples. Further, each of the practical examples can be appropriately combined within a range without inconsistency.

First, a surface code in quantum error correction performed in the present embodiment will be described. The surface code is a quantum error correction code configured by arranging quantum bits on a two-dimensional square lattice having an open boundary condition and allowing adjacent quantum bits to interact with each other.

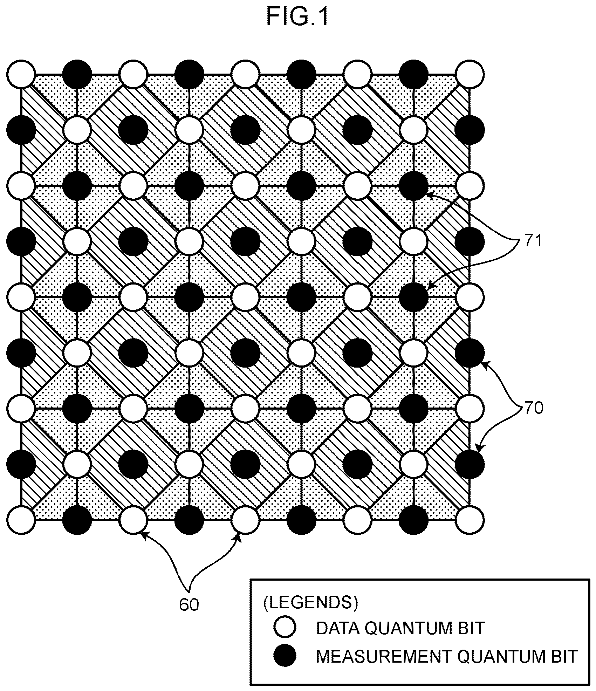

FIG. 1 illustrates an exemplary configuration of the surface code. In FIG. 1, the white circles (○) each indicate a data quantum bit for writing quantum information, and the black circles (•) each indicate a measurement quantum bit (also referred to as an auxiliary quantum bit, for example) for quantum error detection. As illustrated in FIG. 1, a plurality of data quantum bits is present, and the data quantum bits are collectively referred to as data quantum bits 60. Further, in the surface code, the occurrence location of a quantum error is estimated on the basis of the respective measurement values of the measurement quantum bits. As illustrated in FIG. 1, a plurality of measurement quantum bits is also present, and the measurement quantum bits are collectively referred to as measurement quantum bits 70 or measurement quantum bits 71. The two types of measurement quantum bits are different from each other in content to be detected. In FIG. 1, the measurement quantum bits 70 arranged on the shaded square detect bit inversion, and the measurement quantum bits 71 arranged on the dotted solid square detect phase inversion. The measurement quantum bits 70 and 71 are only different in content to be detected, and the contents of processing such as decoding processing on the measurement quantum bits 70 and 71 are the same. Therefore, in the following description of the present embodiment, the measurement quantum bits 70 that detect bit inversion will be used for description.

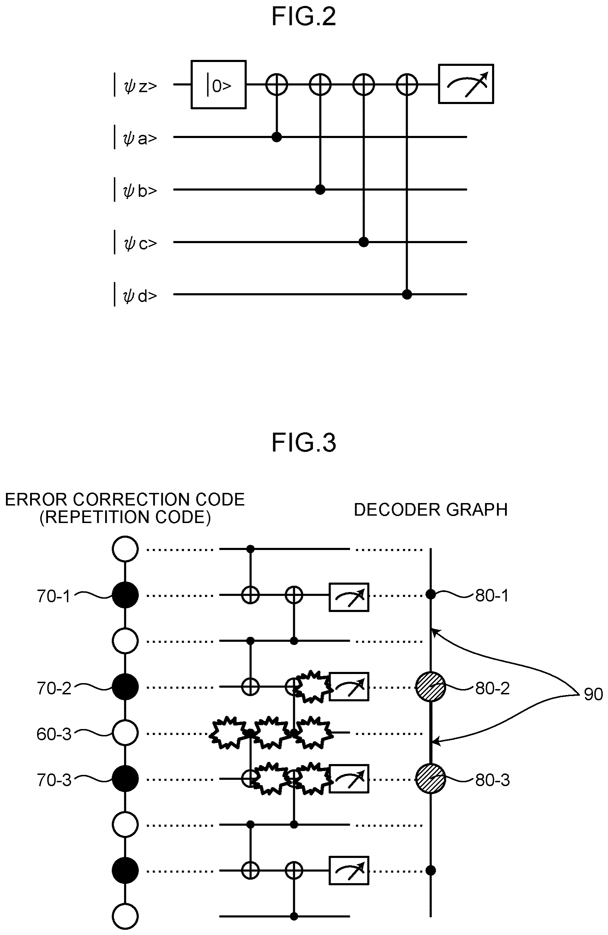

Next, the measurement of the data quantum bits 60 and the measurement quantum bits 70 will be described. FIG. 2 illustrates an exemplary syndrome measurement circuit. The measurement circuit illustrated in FIG. 2 is a circuit for measuring the state of the data quantum bits 60 and the state of the measurement quantum bits 70, namely, bit inversion. Such a data quantum bit and a measurement quantum bit mutually interact with each other due to the operation of a quantum circuit called a syndrome measurement circuit, and an error having occurred in the data quantum bit can be detected by measuring the state of an adjacent measurement quantum bit. In the example of FIG. 2, $|\psi_z\rangle$ represents the state of a measurement quantum bit 70, and $|\psi_a\rangle$ to $|\psi_d\rangle$ represent the respective states of the four data quantum bits 60 that are adjacent to the periphery of the measurement quantum bit 70. For example, in the case of error occurrence in a data quantum bit 60, the measurement result of the adjacent measurement quantum bit 70 is inverted from +1 to -1. The measurement result of the measurement quantum bit is referred to as a syndrome. Then, each syndrome is connected on an edge to generate a decoder graph, and the error location is estimated.

Next, such a decoder graph will be described. FIG. 3 explanatorily illustrates a quantum error estimation using the decoder graph. FIG. 3 illustrates the decoder graph of the error correction codes (repetition codes) generated by alternately arranging the data quantum bits 60 and the measurement quantum bits 70 one-dimensionally. In FIG. 3, the measurement results of the measurement quantum bits 70-1, 70-2, 70-3 ... are indicated as measurement results 80-1, 80-2, 80-3 ... (hereinafter, collectively referred to as "measurement results 80"), respectively. The measurement results 80 are each connected on an edge 90, so that the decoder graph is generated. On the decoder graph, each small black circle indicating the corresponding measurement result 80 is called a vertex.

In the case of error occurrence in a data quantum bit 60, the measurement result of an adjacent measurement quantum bit 70 is inverted. Therefore, as illustrated in FIG. 3, for example, in the case of error occurrence in the data quantum bit 60-3, the measurement result 80-2 of the measurement quantum bit 70-2 located on one side of the data quantum bit 60-3 and the measurement result 80-3 of the measurement quantum bit 70-3 located on the other side thereof are inverted. In FIG. 3, the measurement results 80-2 and 80-3 are indicated by the larger circles to indicate the inversion. Further, the measurement results 80-2 and 80-3 have a correlation therebetween because the measurement results 80-2 and 80-3 relate to the error in the same data quantum bit 60-3, and thus for example, as illustrated in FIG. 3, the edge 90 is indicated to be thicker. From the above, a quantum error estimation problem can be handled as, for example, a matching problem on the decoder graph.

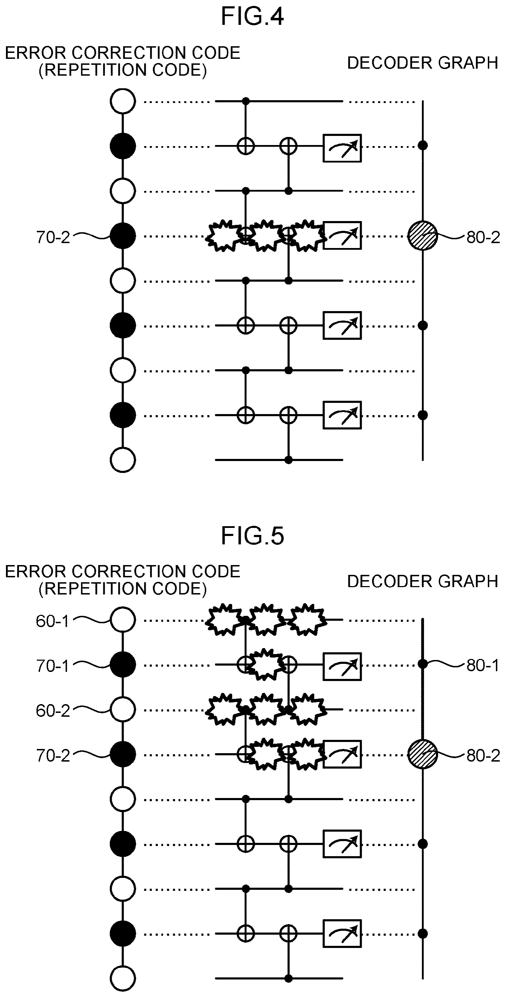

Such a quantum error may occur not only in a data quantum bit 60 but also in a measurement quantum bit 70. FIG. 4 illustrates an exemplary case of error occurrence in a measurement quantum bit. As illustrated in FIG. 4, for example, in the case of error occurrence in the measurement quantum bit 70-2, only the measurement result 80-2 is inverted. However, the case where only the measurement result 80-2 is inverted may occur not only in the case of error occurrence in the measurement quantum bit 70-2 but also in the case of error occurrence in the data quantum bit 60, which may lead to false estimation of the quantum error.

FIG. 5 explanatorily illustrates the false estimation of the quantum error. As illustrated in FIG. 5, the case where only the measurement result 80-2 is inverted may also occur in the case of error occurrence in the two data quantum bits 60-1 and 60-2. More specifically, in the case of error occurrence in the data quantum bit 60-1, the measurement result 80-1 of the adjacent measurement quantum bit 70-1 is inverted. In the case of error occurrence in the data quantum bit 60-2, the measurement results 80-1 and 80-2 of the adjacent measurement quantum bits 70-1 and 70-2 are inverted. That is, in the case of error occurrence in the two data quantum bits 60-1 and 60-2, the measurement result 80-1 is inverted twice, and as a result, returns to a non-inversion state, and only the measurement result 80-2 is inverted as illustrated in FIG. 5. Therefore, use of the quantum error estimation method with such a decoder graph may lead to false estimation.

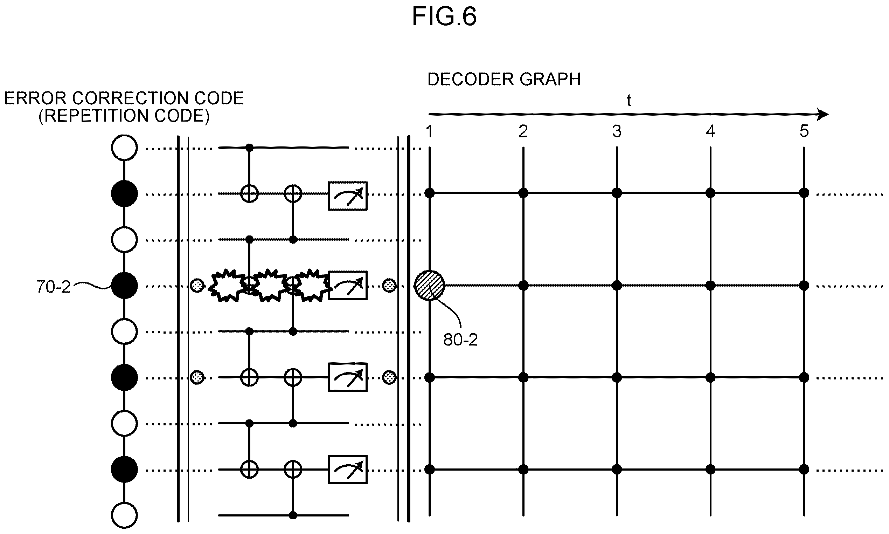

Repetitive syndrome measurement can cope with such false estimation of the quantum error in the decoder graph. FIG. 6 illustrates an example (1) of a method of coping with the false estimation of the quantum error. The decoder graph illustrated in FIG. 6 is obtained by repeating syndrome measurement and arranging the measurement results in time series along time t. In the following description, the syndrome measurement at time t is referred to as a round, and for example, a round at time t = 1 is referred to as a round 1. The example of FIG. 6 indicates that the measurement result 80-2 of the measurement quantum bit 70-2 is inverted only at the round 1.

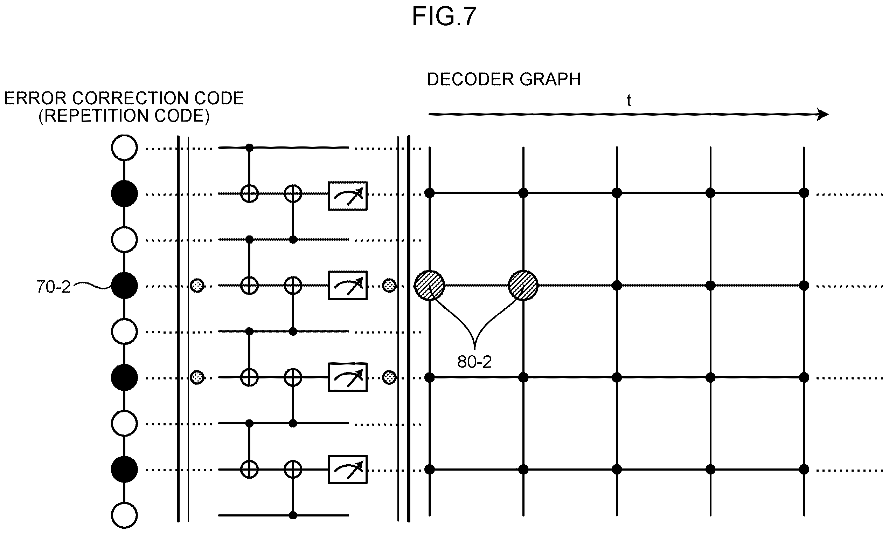

FIG. 7 illustrates an example (2) of the method of coping with the false estimation of the quantum error. The decoder graph illustrated in FIG. 7 is the continuation of FIG. 6 and indicates the measurement results up to the round 2. In the example of FIG. 7, the measurement result 80-2 of the measurement quantum bit 70-2 is inverted at both the round 1 and the round 2. Because the error is reset for each round, according to the inversion of only the measurement result 80-2 at both the round 1 and the round 2, it can be estimated that an error is highly likely to have occurred in the measurement quantum bit 70-2, for example. In such a manner, the repetitive syndrome measurement results in coping with false estimation of a quantum error with the decoder graph.

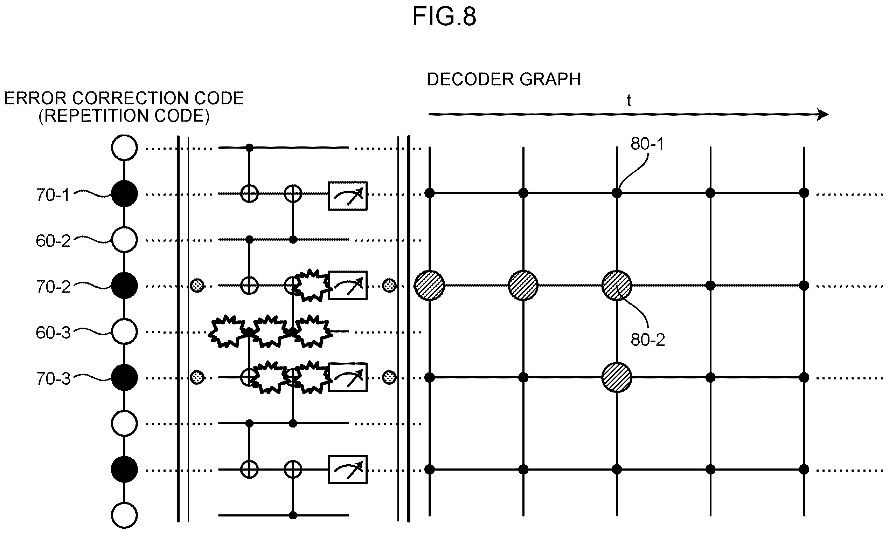

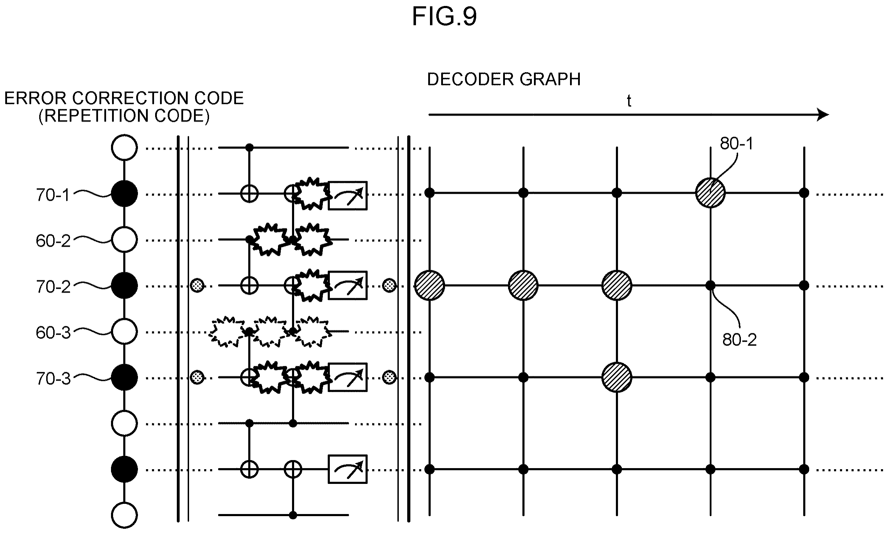

An error may occur during syndrome measurement, and in such a case, the syndrome is inverted by a time difference. FIG. 8 explanatorily illustrates a quantum error detection during measurement (1). FIG. 9 explanatorily illustrates a quantum error detection during measurement (2). FIGS. 8 and 9 are the continuation of FIG. 7. FIG. 8 illustrates the measurement results up to the round 3, and FIG. 9 illustrates the measurement results up to the round 4. For example, even in the case of error occurrence in the data quantum bit 60-2 during syndrome measurement at the round 3 illustrated in FIG. 8, the measurement result 80-1 of the measurement quantum bit 70-1 on one side of the data quantum bit 60-2 and the measurement result 80-2 of the measurement quantum bit 70-2 on the other side thereof are not inverted. In FIG. 8, the measurement result 80-2 at the round 3 is inverted because an error in the data quantum bit 60-3 is detected. Then, in the case of error occurrence in the data quantum bit 60-2 during syndrome measurement at the round 3, the measurement results 80-1 and 80-2 at the round 4 are inverted with a time difference as illustrated in FIG. 9. The measurement result 80-2 at the round 4 is not inverted because two errors in the data quantum bits 60-2 and 60-3 are detected, and thus, the measurement result 80-2 is inverted twice. As a result, the measurement result 80-2 returns to the non-inversion state in which the measurement result 80-2 is not inverted.

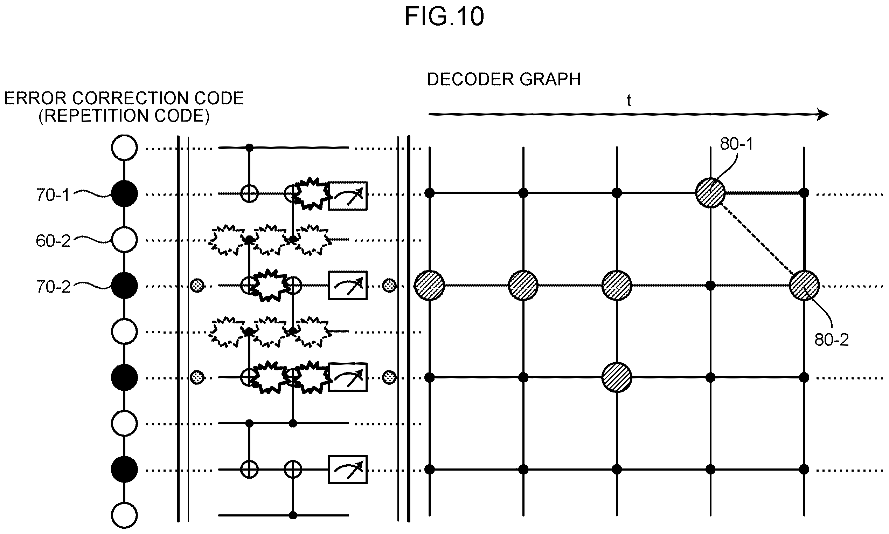

In addition, in the decoder graph, in the case of error occurrence during syndrome measurement, syndromes at two points that need to be inverted at the same round may be inverted temporally apart from one error, namely, at the different rounds in some cases. Such a phenomenon is called a hook error. FIG. 10 explanatorily illustrates a hook error. The example of FIG. 10 illustrates that the measurement result 80-1 and the measurement result 80-2 that need to be inverted at the same round due to an error in the data quantum bit 60-2 are inverted at the round 4 and the round 5 that are different from each other due to the hook error.

Generation of a decoder graph without consideration in correlation due to, for example, a hook error may lead to false estimation of a quantum error. Therefore, for example, as indicated by the oblique dotted line in FIG. 10, in order to indicate that the measurement result 80-1 at the round 4 and the measurement result 80-2 at the round 5 have a correlation therebetween, it preferably needs to add an edge connecting both the measurement results. As described above, in order to cope with, for example, such a hook error and perform more accurate quantum error estimation and correction, it preferably need to adjust, with the identification of the noise acting, the relation of connection indicating the correlation between the measurement results and adjust the weight of the edge in the decoder graph. Such adjustment of the relation of connection between the measurement results and adjustment of the edge in order to cope with the hook error and others can be performed using, for example, the following existing techniques 1 and 2.

First, as the existing technique 1, there is a technique of modeling a noise generated in a quantum computer, estimating the correlation between syndrome inversions from the noise model, and generating a decoder graph on the basis of the content estimated. However, the existing technique 1 is effective only in a case where the noise generated in the actual quantum computer follows the assumed noise model. Therefore, in a case where the noise that may be generated in the actual quantum computer is different from the assumed noise, the error correlation may be missed or an error may occur, thereby leading to a failure in quantum error correction.

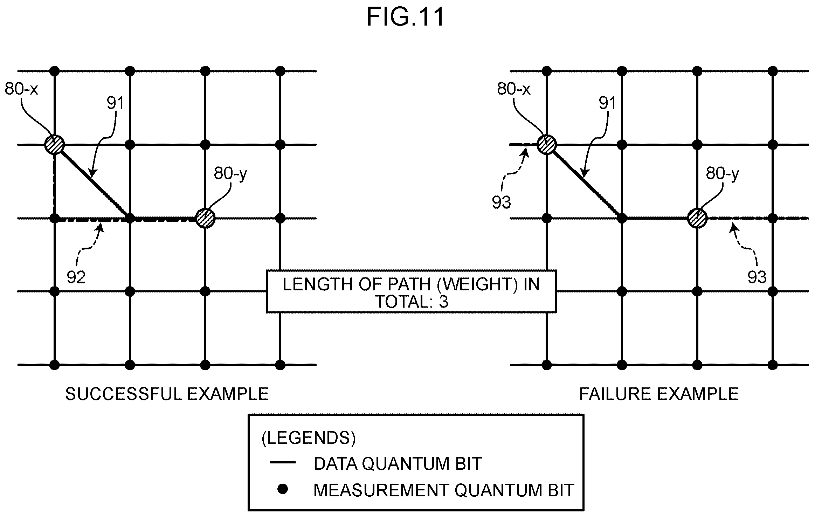

FIG. 11 illustrates the successful example and the failure example in quantum error correction using the existing technique 1. In the decoder graph illustrated in FIG. 11, the small black circles each indicate a measurement quantum bit, and the edges each indicate a data quantum bit that may be corrected. The measurement results 80-x and 80-y indicated by the larger circles indicate inverted syndromes. The line segment 91 connecting the measurement results 80-x and 80-y is the relation of connection between the actual correct syndromes, and the line segments 92 and 93 are the error correlation between the data quantum bits estimated from the inversion pattern of the syndromes. As described above, the error correlation between the data quantum bits is expressed as a relation of connection on the decoder graph. In the example of FIG. 11, the length of the path (weight) of the correlation to be estimated is 3 (edges) in total.

As illustrated on the left side of FIG. 11, the line segment 92 is correctly connected so that the measurement results 80-x and 80-y have a correlation therebetween. On the other hand, as illustrated on the right side of FIG. 11, on the line segment 93, the measurement result 80-x is connected to the open boundary at one end of the lattice and the measurement result 80-y is connected to the open boundary at the other end thereof. In this case, an error occurs in the estimation of the error correlation between the data quantum bits, and the quantum error correction fails.

As illustrated in FIG. 11, for example, when an error is estimated with the decoder graph generated by the existing technique 1 in a situation where two quantum bit errors occur with a probability proportional to the magnitude of noise, the quantum error correction fails with a probability of 1/2. The probability of 1/2 is because two types of estimation results with respect to the error correlation between the data quantum bits are obtained at an equal ratio.

Next, as an existing technique 2, there is a technique of calculating the correlation between syndrome inversions by measurement sampling and adjusting the relation of connection and the weight of an edge on the decoder graph on the basis of the result. For example, in a case where there is a correlation between the inversions of two syndromes such as the measurement results 80-1 and 80-2 illustrated in FIG. 10, it is considered that there is a relation of connection between the two vertices in the decoder graph. Therefore, the probability of error occurrence $p_{ij}$ that is a correlation between syndrome inversions can be calculated by repeating syndrome measurement a sufficient number of times. In the probability of error occurrence $p_{ij}$, i and j each represent serial numbers of syndromes, and are set in accordance with the rule of "(Round number) $\times$ (Number of measurement quantum bits) + (Row number) $\times$ (Number of measurement quantum bits per row) + (Column number)", for example. In the existing technique 2, the decoder graph can be generated without modeling the noise generated in the quantum computer, so that the missing or error of the correlation that is a problem in the existing technique 1 does not occur.

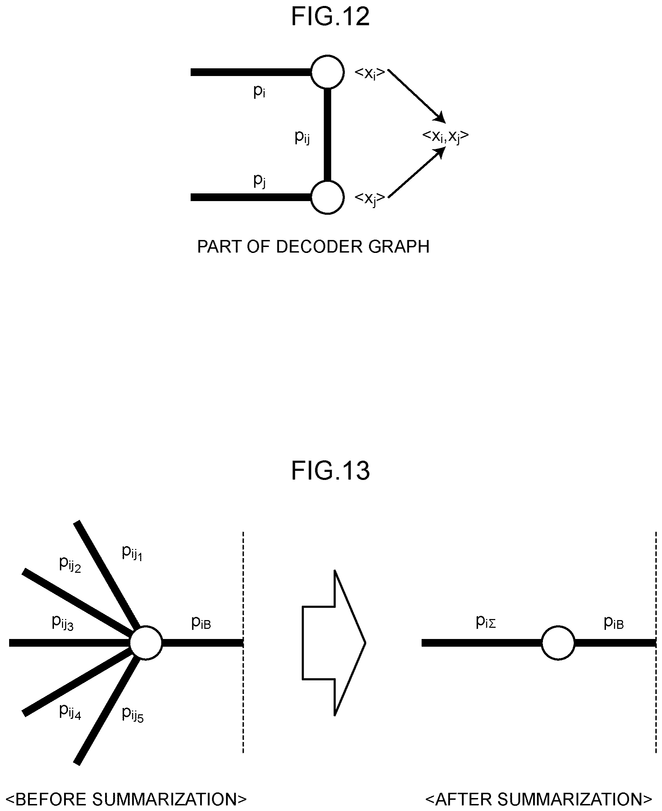

The probability of error occurrence $p_{ij}$ will be specifically described. FIG. 12 explanatorily illustrates the calculation of the probability of error occurrence $p_{ij}$. FIG. 12 is an excerpt of a part of the decoder graph, in which the white circles each indicate a syndrome and an edge connected to each syndrome indicates a data quantum bit. Further, $p_i$, $p_j$, and $p_{ij}$ each indicate the correlation of the probability of error occurrence on the edge between the corresponding syndromes, namely, the probability that the corresponding syndromes are inverted. Furthermore, $\langle x_i \rangle$, $\langle x_j \rangle$, and $\langle x_i x_j \rangle$ each represent an expected value of the measurement result of the corresponding syndrome. Still furthermore, the relation between each of the expected values $\langle x_i \rangle$, $\langle x_j \rangle$, and $\langle x_i x_j \rangle$ and each of the probabilities of error occurrence $p_i$, $p_j$, and $p_{ij}$ can be expressed using the following Mathematical Expression (1).

$$\begin{cases} \langle x_i \rangle = p_i(1 - p_{ij}) + (1 - p_i)p_{ij} \\ \langle x_j \rangle = p_j(1 - p_{ij}) + (1 - p_j)p_{ij} \qquad \cdots (1) \\ \langle x_i x_j \rangle = (1 - p_i)(1 - p_j)p_{ij} + p_i p_j(1 - p_{ij}) \end{cases}$$

In addition, the probability of error occurrence $p_{ij}$ can be calculated by Mathematical Expression (1) to calculate each of the expected values $\langle x_i \rangle$, $\langle x_j \rangle$, and $\langle x_i x_j \rangle$ and applying the expected values $\langle x_i \rangle$, $\langle x_j \rangle$, and $\langle x_i x_j \rangle$ to the following Mathematical Expression (2).

$$p_{ij} = \frac{1}{2} - \frac{1}{2}\sqrt{1 - \frac{4(\langle x_i x_j \rangle - \langle x_i \rangle \langle x_j \rangle)}{1 - 2\langle x_i \rangle - 2\langle x_j \rangle + 4\langle x_i x_j \rangle}} \qquad \cdots (2)$$

However, in the case of the surface code, the periphery of a code is an open boundary condition, and a syndrome may be inverted independently in some cases. Therefore, it is difficult to generate the decoder graph only by calculating the correlation of the inversion between the two syndromes. Therefore, the calculation of the probability of error occurrence $p_{ij}$ is applied, and the probability $p_{iB}$ of independent inversion of the syndrome in contact with the open boundary can be calculated using the following Mathematical Expression (3).

$$p_{iB} = \frac{\langle x_i \rangle - p_{i\Sigma}}{1 - 2p_{i\Sigma}} \qquad \cdots (3)$$

In Mathematical Expression (3), $p_{i\Sigma}$ is the sum of the probabilities of inversion of the syndrome in contact with the open boundary due to an error occurrence on the edge between the syndrome in contact with the open boundary and an adjacent syndrome. FIG. 13 explanatorily illustrates the calculation of the probability of independent inversion of the syndrome in contact with the open boundary. In FIG. 13, $p_{ij1}$, $p_{ij2}$, $p_{ij3}$, $p_{ij4}$, and $p_{ij5}$ are the probabilities of error occurrence on each edge between the syndrome in contact with the open boundary and the adjacent syndrome. As illustrated in FIG. 13, the probabilities $p_{ij1}$, $p_{ij2}$, $p_{ij3}$, $p_{ij4}$, and $p_{ij5}$ of the error occurrence on each edge can be summarized as $p_{i\Sigma}$ using the following Mathematical Expression (4).

$$\begin{cases} p_{i\Sigma} = g\left(p_{ij_k}, \cdots g\left(p_{ij_3}, g(p_{ij_2}, p_{ij_1})\right)\right) \quad \cdots (4) \\ g(p, q) = p + q - 2pq \end{cases}$$

In Mathematical Expression (4), in the case of presence of k-number of connected destination syndromes ($j_1$, $j_2$, ..., $j_k$) in total in the i-th syndrome, $p_{i\Sigma}$ represents the relation of connection between the k-number of connected destination syndromes ($j_1$, $j_2$, ..., $j_k$), namely, the probability of whether the i-th syndrome is inverted due to an error occurrence in any one of the edges. Further, $p_{ij_k}$ represents the probability of error occurrence on the edge between the i-th syndrome and the $j_k$-th syndrome. Furthermore, g represents the function that gives the probability of occurrence of final inversion in a case where a trial of syndrome inversion with certain probabilities p and q. The reason why 2pq is subtracted is that if the syndrome is inverted twice, the syndrome returns to the original state.

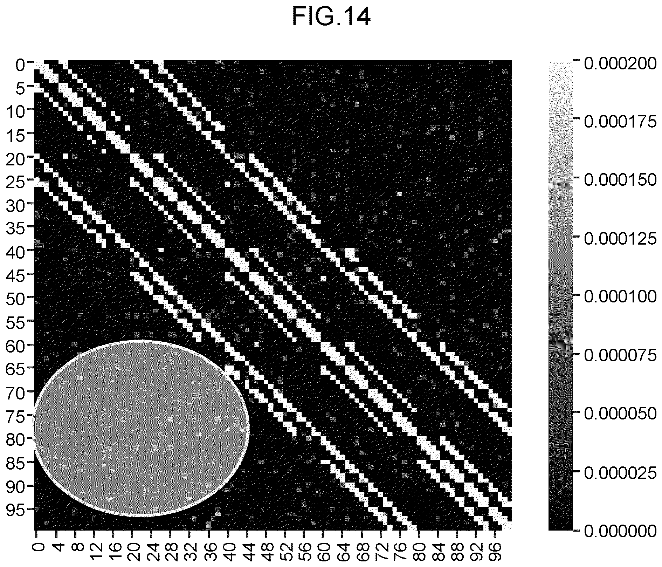

However, the existing technique 2 also has the following problems. FIG. 14 is a graph indicating exemplary calculation results of the probability of error occurrence using the existing technique 2. Further, FIG. 14 graphically represents the probability of error occurrence $p_{ij}$ calculated for the surface code with the code distance d = 5 using the existing technique 2. The code distance d is a parameter for determining the number of errors that can be corrected by a code. For example, the number of errors that can be corrected by the code is "(d - 1)/2". Further, in FIG. 14, the vertical axis and the horizontal axis of the graph indicate serial numbers i and j of syndromes, respectively and the value of the probability of error occurrence $p_{ij}$ is indicated by shading. Furthermore, in the example of FIG. 14, a component having a small value of $p_{ij}$ is displayed.

However, for example, as illustrated in the lower left circle of FIG. 14, because the calculated probability of error occurrence $p_{ij}$ includes statistical fluctuation, the value of the component that is normally supposed to satisfy $p_{ij} = 0$ is a finite value. In a case where a decoder graph is generated using $p_{ij}$ having such a component, an extra relation of connection is added to the decoder graph and false estimation of a quantum error may occur, thereby resulting in deterioration in the error correction performance.

Therefore, in the present embodiment, the probability of error occurrence p is changed to repeatedly calculate $p_{ij}$, and only a component proportional to p is extracted. As a result, because the mean value of the components that are supposed to satisfy $p_{ij} = 0$ remains 0 even if the probability of error occurrence p is changed for each edge, the influence of the sample error in the components that are supposed to satisfy $p_{ij} = 0$ can be removed. As a method of changing the probability of error occurrence p, there is a method of inserting a waiting time for no operation into each part of the quantum circuit to increase noise due to mitigation, for example.

(Functional Configuration of Information Processing Apparatus 10)

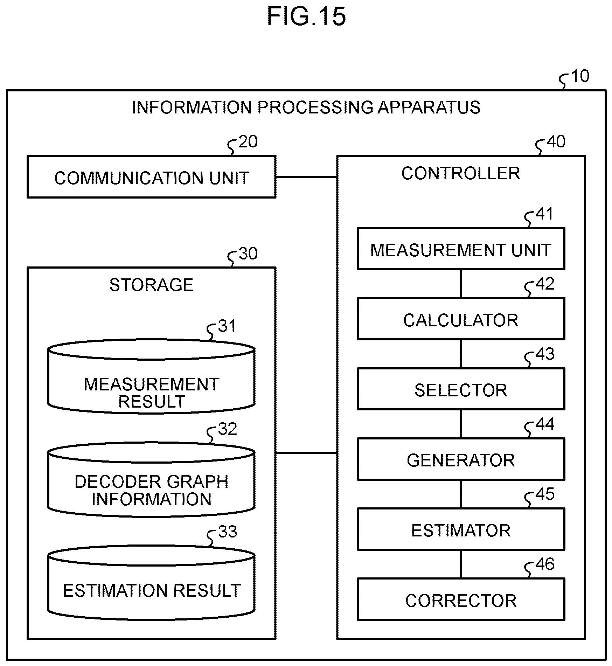

Next, the functional configuration of the information processing apparatus 10 that is an execution subject of the present embodiment will be described. FIG. 15 is the configuration diagram of the information processing apparatus 10 according to the present embodiment. As illustrated in FIG. 15, the information processing apparatus 10 includes a communication unit 20, a storage 30, and a controller 40. Further, although not illustrated, the information processing apparatus 10 may include, for example, an input device such as a keyboard and a mouse, and an output device such as a display.

The communication unit 20 is a processing unit that controls communication with another computer and others, and is, for example, a communication interface such as a network interface card.

The storage 30 has a function of storing various types of data and a program executed by the controller 40, and is achieved by, for example, a storage device such as a memory or a hard disk. The storage 30 stores a measurement result 31, decoder graph information 32, and an estimation result 33, for example.

In the measurement result 31, the measurement result from a surface code, for example, the measurement result of a measurement quantum bit, namely, information regarding a syndrome and others is stored. Further, in the measurement result 31, for example, information regarding calculated values such as the correlation $p_{ij}$ between syndromes inversions calculated from the measurement result and the probability $p_{iB}$ of independent inversion of the syndrome in contact with the open boundary is stored.

In the decoder graph information 32, for example, information regarding a decoder graph generated by connecting each syndrome on an edge is stored.

In the estimation result 33, for example, information regarding the estimation result of a quantum error estimated with the decoder graph is stored.

The above information stored in the storage 30 is merely an example, and thus the storage 30 can store various pieces of information different from the above information.

The controller 40 is a processing unit that controls the entirety of the information processing apparatus 10, and is, for example, a processor such as a central processing unit (CPU) or a quantum processing unit (QPU). The controller 40 includes processing units such as a measurement unit 41, a calculator 42, a selector 43, a generator 44, an estimator 45, and a corrector 46. Each processing unit is an exemplary electronic circuit included in the processor or an exemplary process executed by the processor.

For example, the measurement unit 41 changes the probability of error occurrence p and measures with a surface code in error correction of the quantum computer, namely, measures the value of a measurement quantum bit. For example, in order to change the probability of error occurrence p, the measurement unit 41 inserts a waiting time for no operation into each part of the quantum circuit to increase noise.

The calculator 42 calculates the probability of error occurrence of a quantum bit on the basis of the measurement result from the surface code including the quantum bit measured by the measurement unit 41, for example. The measurement result from the surface code measured by the measurement unit 41 may include the measurement results from the surface code due to repetitive measurement with changing of the magnitude of noise. Further, the probability of error occurrence may include, for example, the correlation $p_{ij}$ between syndrome inversions and the probability $p_{iB}$ of independent inversion of the syndrome in contact with the open boundary.

The selector 43 selects the probability of error occurrence proportional to the magnitude of noise generated in the quantum computer, from the probabilities of error occurrence calculated by the calculator 42, for example. This selecting may include, for example, setting, at a value of 0, a probability of error occurrence not proportional to the magnitude of noise generated in the quantum computer among the probabilities of error occurrence calculated by the calculator 42 and selecting the probability of error occurrence proportional to the magnitude of noise. The determination as to whether or not the probability of error occurrence is proportional to the magnitude of noise may have a certain range. Even if the probability of error occurrence is not accurately proportional to a constant multiple, it may be determined whether or not the probability of error occurrence is proportional to the magnitude of noise within a range that can be regarded as proportional.

The generator 44 generates a decoder graph that is a weighted graph based on the surface code, on the basis of the probability of error occurrence selected by the selector 43, for example. This generating may include, for example, generating a decoder graph including a relation of connection that is an error correlation between the quantum bits in the surface code, on the basis of the selected probability of error occurrence selected by the selector 43. The generation of the decoder graph will be described more specifically.

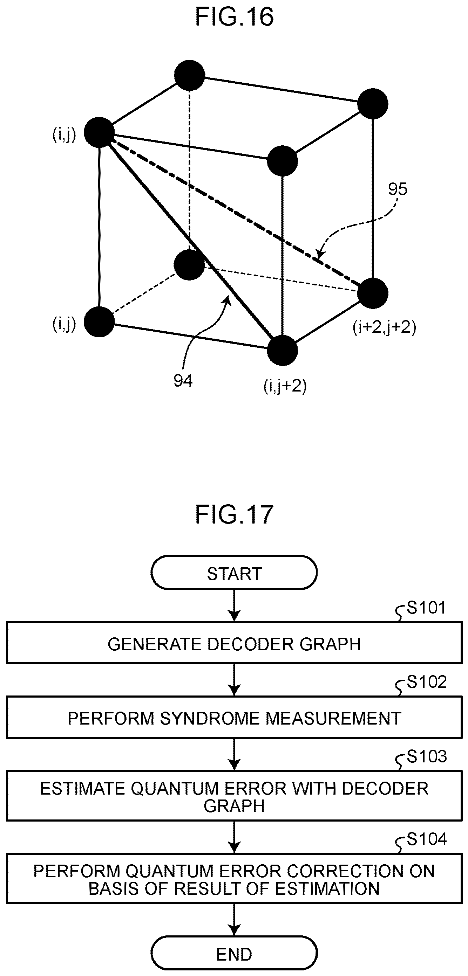

FIG. 16 illustrates an exemplary construction of the correspondence relation between an edge and a correction-target data quantum bit on the decoder graph. The lattice illustrated in FIG. 16 is an exemplary decoder graph, and the vertical direction corresponds to the time direction, and the direction orthogonal to the time direction corresponds to the spatial direction. Further, the black circles on the lattice each indicate a syndrome, namely, the measurement result of a measurement quantum bit, and the edges each indicate the data quantum bit. The correspondence relation between each edge and the data quantum bit can be obtained from, for example, the correlation $p_{ij}$ between syndrome inversions and the probability $p_{iB}$ of independent inversion of the syndrome in contact with the open boundary. As an exemplary construction of the correspondence relation, the edge connected in the spatial direction on the lattice corresponds to the data quantum bit located at the center of the edge, and the edge connected in the time direction has no particular corresponding data quantum bit and is not subject to quantum error correction. Furthermore, the line segments 94 and 95 that are the edges connected in the spatial direction and the time direction indicate the correlation between the connected syndromes, and correspond to the data particle bits located on the shortest path connecting the end points of the edges projected on the lattice. For example, in the lattice illustrated in FIG. 16, the line segment 94 corresponds to the data quantum bit located on (i, j+1), and the line segment 95 corresponds to the data quantum bit located on (i, j+1) and (i+1, j+2).

Regarding the correspondence relation between the edge and the data quantum bit to be corrected on the decoder graph, the estimation result of the quantum error is given as a set of edges connecting the pair of vertices on the decoder graph by the shortest path. Then, in order to perform quantum error correction on the basis of the estimation result of the quantum error using the decoder graph, the correction is performed by selecting one associated with the data quantum bit of the code from the given set of edges.

The estimator 45 estimates an error in the quantum bit with the decoder graph generated by the generator 44, for example.

The corrector 46 performs quantum error correction on the error on the basis of the result from the estimation of the error in the quantum bit estimated by the estimator 45.

(Flow of Processing)

Next, the quantum error correction processing according to the present embodiment will be described along the flow of processing. FIG. 17 is a flowchart illustrating an exemplary flow of the quantum error correction processing according to the present embodiment.

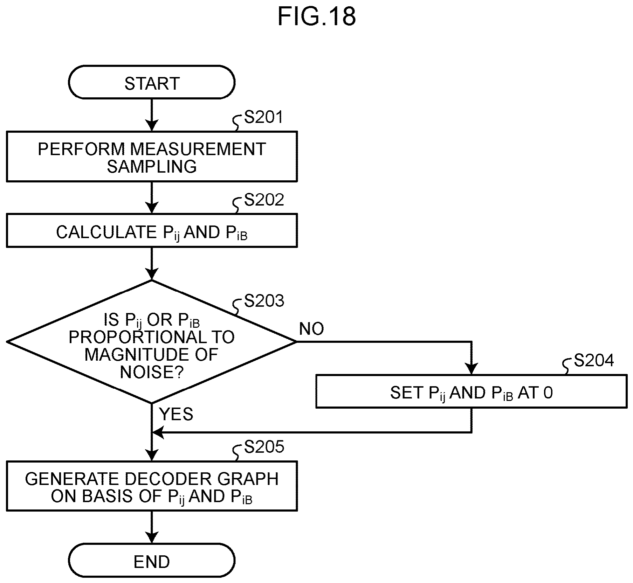

First, the information processing apparatus 10 calculates the probabilities of error occurrence in the quantum bit on the basis of the measurement result from a surface code due to repetitive measurement with the surface code with changing of the magnitude of noise, and generates a decoder graph on the basis of the probabilities of error occurrence (Step S101). The decoder graph generation processing in Step S101 will be described in more detail with reference to FIG. 18.

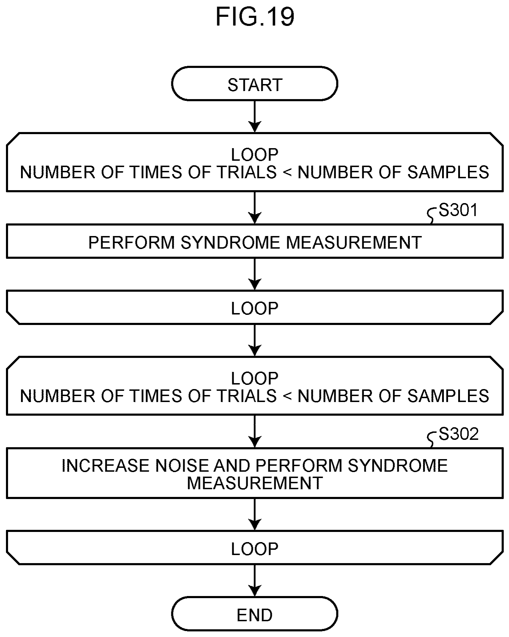

FIG. 18 is a flowchart illustrating an exemplary flow of the decoder graph generation processing according to the present embodiment. First, the information processing apparatus 10 performs measurement sampling (Step S201). The measurement sampling processing in Step S201 will be described in more detail with reference to FIG. 19.

FIG. 19 is a flowchart illustrating an exemplary flow of the measurement sampling processing according to the present embodiment. First, the information processing apparatus 10 performs repetitive syndrome measurement for a preset number of samples, such as the number of measurement quantum bits $\times$ the number of rounds, for example (Step S301).

Next, the information processing apparatus 10 increases noise for each repetition and performs repetitive syndrome measurement for a preset number of samples, for example (Step S302). After the number of samples is performed in Step S302, the measurement sampling processing illustrated in FIG. 19 ends, and the flow returns to the decoder graph generation processing illustrated in FIG. 18.

Next, on the basis of the measurement results of the syndrome measurement performed in Steps S301 and S302, the information processing apparatus 10 calculates the correlation $p_{ij}$ between syndrome inversions and the probability $p_{iB}$ of independent inversion of the syndrome in contact with the open boundary (Step S202). As a result, such a calculation result as illustrated in FIG. 14 is obtained.

Next, the information processing apparatus 10 determines whether or not $p_{ij}$ or $p_{iB}$ calculated in Step S202 is proportional to the magnitude of noise, for example (Step S203). If $p_{ij}$ or $p_{iB}$ is not proportional to the magnitude of noise (Step S203: No), the information processing apparatus 10 sets, at a value of 0, $p_{ij}$ or $p_{iB}$ that is not proportional to the magnitude of noise, for example (Step S204).

If $p_{ij}$ or $p_{iB}$ is proportional to the magnitude of noise (Step S203: Yes), or after Step S204 is performed, the information processing apparatus 10 generates a decoder graph on the basis of $p_{ij}$ and $p_{iB}$, for example (Step S205). After Step S205 is performed, the decoder graph generation processing illustrated in FIG. 18 ends, and the flow returns to the quantum error correction processing illustrated in FIG. 17.

Next, the information processing apparatus 10 performs syndrome measurement, for example (Step S102).

Next, the information processing apparatus 10 estimates an error in the quantum bits in the syndrome measurement in step S102 with the decoder graph generated in step S101, for example (Step S103).

Next, the information processing apparatus 10 performs quantum error correction on the error on the basis of the result from the estimation of the error estimated in Step S103 (Step S104). After Step S104 is performed, the quantum error correction processing illustrated in FIG. 17 ends.

(Effects)

As described above, the information processing apparatus 10 calculates, on the basis of a measurement result from a surface code including quantum bits in error correction of a quantum computer, probabilities of error occurrence in the quantum bits, selects a probability of error occurrence proportional to magnitude of noise generated in the quantum computer, from the probabilities of error occurrence, and generates a decoder graph that is a weighted graph based on the surface code, on the basis of the selected probability of error occurrence.

In such a manner, the information processing apparatus 10 selects the probability of error occurrence proportional to the magnitude of noise from the probabilities of error occurrence in the quantum bits calculated on the basis of the measurement result from the surface code, and generates the decoder graph. As a result, the information processing apparatus 10 can improve the error correction performance in quantum error correction.

Further, the calculating the probabilities of error occurrence performed by the information processing apparatus 10 includes calculating the probabilities of error occurrence, on the basis of the measurement result from the surface code due to repetitive measurement with changing of the magnitude of noise and, the selecting the probability of error occurrence performed by the information processing apparatus 10 includes setting, at a value of 0, a probability of error occurrence not proportional to the magnitude of noise among the probabilities of error occurrence and selecting the probability of error occurrence proportional to the magnitude of noise.

As a result, the information processing apparatus 10 can improve the error correction performance in quantum error correction.

Furthermore, the generating the decoder graph performed by the information processing apparatus 10 includes generating the decoder graph including a relation of connection that is an error correlation between the quantum bits in the surface code, on the basis of the selected probability of error occurrence.

As a result, the information processing apparatus 10 can improve the error correction performance in quantum error correction.

Still furthermore, the information processing apparatus 10 estimates a quantum bit error with the decoder graph, and performs quantum error correction on the error on the basis of the result from the estimation of the error.

As a result, the information processing apparatus 10 can improve the error correction performance in quantum error correction.

(System)

The processing procedure, the control procedure, the specific names, and the information including various pieces of data and various parameters illustrated herein or in the drawings may be freely changed unless otherwise specified. Further, the practical examples, distributions, numerical values, and others described in the examples are merely examples, and thus may be freely changed.

Furthermore, the specific forms of distribution and integration of the components of the information processing apparatus 10 are not limited to those illustrated in the drawings. For example, the calculator 42 of the information processing apparatus 10 may be distributed to a plurality of processing units, or the measurement unit 41 and the calculator 42 of the information processing apparatus 10 may be integrated into a single processing unit. That is, all or a part of the components may be functionally or physically distributed or integrated in a freely selected unit in accordance with various loads, usage conditions, and others. Still furthermore, all or a freely-selected part of the respective processing function of the devices can be achieved by a CPU or a QPU and a program analyzed and executed by the CPU or the QPU, or can be achieved as hardware by wired logic.

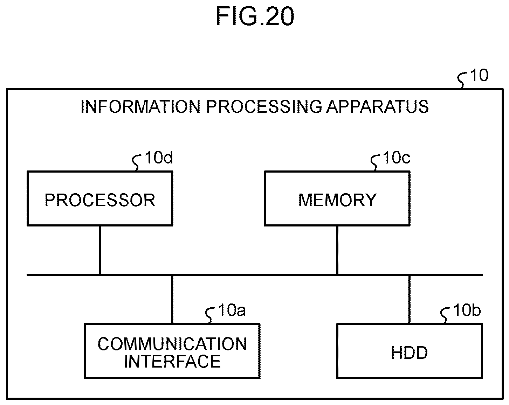

FIG. 20 is a diagram illustrating an exemplary hardware configuration of the information processing apparatus 10 according to the present embodiment. As illustrated in FIG. 20, the information processing apparatus 10 includes a communication interface 10a, a hard disk drive (HDD) 10b, a memory 10c, and a processor 10d. Further, the constituents illustrated in FIG. 20 are connected to each other through a bus, for example.

The communication interface 10a is, for example, a network interface card, and communicates with a different information processing apparatus. The HDD 10b stores, for example, programs and data for operating each function of the information processing apparatus 10.

The processor 10d is a CPU, a QPU, a micro processing unit (MPU), or a graphics processing unit (GPU), for example. Further, the processor 10d may be achieved by an integrated circuit such as an application specific integrated circuit (ASIC) or a field programmable gate array (FPGA). For example, the processor 10d reads a program for executing processing similar to each processing unit illustrated in FIG. 15 and the others from, for example, the HDD 10b and develops the program in the memory 10c. As a result, the processor 10d can operate as a hardware circuit that executes a process of achieving each function of the information processing apparatus 10.

Further, the information processing apparatus 10 can also achieve functions similar to those of the above practical examples by reading the program from the recording medium by the medium reading device and executing the read program. The program referred to in an example different from the practical examples is not limited to being executed by the information processing apparatus 10. For example, the above practical examples may be similarly applied to a case where a different information processing apparatus executes a program or a case where a different information processing apparatus and the information processing apparatus 10 execute a program in cooperation with each other.

The program may be distributed through a network such as the Internet. Further, the program may be recorded in a computer-readable storage medium such as a hard disk, a flexible disk (FD), a CD-ROM, a magneto-optical disk (MO), or a digital versatile disc (DVD). The program may be executed by being read from the recording medium by, for example, the information processing apparatus 10.

Reference Signs List

10      INFORMATION PROCESSING APPARATUS

10a       COMMUNICATION INTERFACE

10b       HDD

10c       MEMORY

10d       PROCESSOR

20        COMMUNICATION UNIT

30        STORAGE

31        MEASUREMENT RESULT

32        DECODER GRAPH INFORMATION

33        ESTIMATION RESULT

40        CONTROLLER

41        MEASUREMENT UNIT

42        CALCULATOR

43        SELECTOR

44        GENERATOR

45        ESTIMATOR

46        CORRECTOR

60        DATA QUANTUM BIT

70,       71 MEASUREMENT QUANTUM BIT

80          MEASUREMENT RESULT

90          EDGE

91 to 95    LINE SEGMENT

**Claims**

1.  An information processing program causing a computer to execute a process comprising:

    calculating, based on a measurement result from a surface code including quantum bits in error correction of a quantum computer, probabilities of error occurrence in the quantum bits;
    selecting a probability of error occurrence proportional to magnitude of noise generated in the quantum computer, from the probabilities of error occurrence; and
    generating a decoder graph that is a weighted graph based on the surface code, based on the selected probability of error occurrence.

2.  The information processing program according to claim 1, wherein

    the calculating includes calculating the probabilities of error occurrence, based on the measurement result from the surface code due to repetitive measurement with changing of the magnitude of noise and,
    the selecting includes setting, at a value of 0, a probability of error occurrence not proportional to the magnitude of noise among the probabilities of error occurrence and selecting the probability of error occurrence proportional to the magnitude of noise.

3.  The information processing program according to claim 1 or 2, wherein
    the generating includes generating the decoder graph including a relation of connection that is an error correlation between the quantum bits in the surface code, based on the selected probability of error occurrence.

4.  The information processing program according to claim 1 or 2, wherein the process further includes:

    estimating an error in the quantum bits with the decoder graph; and
    performing quantum error correction on the error, based on a result from the estimating the error.

5.  An information processing apparatus including a control unit configured to execute a process comprising:

    calculating, based on a measurement result from a surface code including quantum bits in error correction of a quantum computer, probabilities of error occurrence in the quantum bits;
    selecting a probability of error occurrence proportional to magnitude of noise generated in the quantum computer, from the probabilities of error occurrence; and
    generating a decoder graph that is a weighted graph based on the surface code, based on the selected probability of error occurrence.

6.  An information processing method carried out by a computer, comprising:

    calculating, based on a measurement result from a surface code including quantum bits in error correction of a quantum computer, probabilities of error occurrence in the quantum bits;
    selecting a probability of error occurrence proportional to magnitude of noise generated in the quantum computer, from the probabilities of error occurrence; and
    generating a decoder graph that is a weighted graph based on the surface code, based on the selected probability of error occurrence.

## FIG.1

71

70

60

(LEGENDS)
○ DATA QUANTUM BIT
● MEASUREMENT QUANTUM BIT

# FIG.2

$|\psi z\rangle$ — $|0\rangle$

$|\psi a\rangle$

$|\psi b\rangle$

$|\psi c\rangle$

$|\psi d\rangle$

# FIG.3

ERROR CORRECTION CODE
(REPETITION CODE)

DECODER GRAPH

70-1

70-2

60-3

70-3

80-1

80-2

80-3

90

## FIG.4

ERROR CORRECTION CODE
(REPETITION CODE)                    DECODER GRAPH

## FIG.5

ERROR CORRECTION CODE
(REPETITION CODE)                    DECODER GRAPH

FIG.6

FIG.7

ERROR CORRECTION CODE
(REPETITION CODE)

DECODER GRAPH

t

70-2

80-2

FIG.8

DECODER GRAPH

ERROR CORRECTION CODE
(REPETITION CODE)

t

80-1

70-1

60-2

70-2

80-2

60-3

70-3

EP 4 679 337 A1

# FIG.9

ERROR CORRECTION CODE
(REPETITION CODE)

DECODER GRAPH

FIG.10

DECODER GRAPH

ERROR CORRECTION CODE
(REPETITION CODE)

FIG.11

## FIG.12

PART OF DECODER GRAPH

## FIG.13

<BEFORE SUMMARIZATION>          <AFTER SUMMARIZATION>

FIG.14

# FIG.15

INFORMATION PROCESSING APPARATUS 10

COMMUNICATION UNIT 20

CONTROLLER 40

STORAGE 30

MEASUREMENT RESULT 31

DECODER GRAPH INFORMATION 32

ESTIMATION RESULT 33

MEASUREMENT UNIT 41

CALCULATOR 42

SELECTOR 43

GENERATOR 44

ESTIMATOR 45

CORRECTOR 46

## FIG.16

## FIG.17

```
        ┌─────────────┐
        │    START    │
        └─────────────┘
               │
               ▼                          ⌐S101
  ┌──────────────────────────────────────┐
  │        GENERATE DECODER GRAPH         │
  └──────────────────────────────────────┘
               │
               ▼                          ⌐S102
  ┌──────────────────────────────────────┐
  │     PERFORM SYNDROME MEASUREMENT      │
  └──────────────────────────────────────┘
               │
               ▼                          ⌐S103
  ┌──────────────────────────────────────┐
  │  ESTIMATE QUANTUM ERROR WITH DECODER  │
  │                GRAPH                  │
  └──────────────────────────────────────┘
               │
               ▼                          ⌐S104
  ┌──────────────────────────────────────┐
  │ PERFORM QUANTUM ERROR CORRECTION ON   │
  │   BASIS OF RESULT OF ESTIMATION       │
  └──────────────────────────────────────┘
               │
               ▼
        ┌─────────────┐
        │     END     │
        └─────────────┘
```

# FIG.18

```
           ┌─────────────────┐
           │      START      │
           └────────┬────────┘
                    │           ⌇S201
           ┌────────▼────────────┐
           │ PERFORM MEASUREMENT │
           │      SAMPLING       │
           └────────┬────────────┘
                    │           ⌇S202
           ┌────────▼────────────┐
           │ CALCULATE Pij AND PiB│
           └────────┬────────────┘
                    │
                   S203
              ╱───────────╲
             ╱  IS Pij OR PiB╲        NO
            ╱ PROPORTIONAL TO ╲──────────────┐
            ╲   MAGNITUDE OF  ╱               │         ⌇S204
             ╲     NOISE?    ╱         ┌───────▼────────────────┐
              ╲───────────╱           │   SET Pij AND PiB AT 0  │
                    │ YES             └───────┬────────────────┘
                    │           ⌇S205          │
           ┌────────▼────────────┐◄───────────┘
           │ GENERATE DECODER GRAPH│
           │  ON BASIS OF Pij AND PiB│
           └────────┬────────────┘
                    │
           ┌────────▼────────┐
           │       END       │
           └─────────────────┘
```

Step S201: PERFORM MEASUREMENT SAMPLING

Step S202: CALCULATE $P_{ij}$ AND $P_{iB}$

Step S203: IS $P_{ij}$ OR $P_{iB}$ PROPORTIONAL TO MAGNITUDE OF NOISE?

Step S204: SET $P_{ij}$ AND $P_{iB}$ AT 0

Step S205: GENERATE DECODER GRAPH ON BASIS OF $P_{ij}$ AND $P_{iB}$

## FIG.19

```
                    START

┌─────────────────────────────────────────────┐
│                    LOOP                       │
│ NUMBER OF TIMES OF TRIALS < NUMBER OF SAMPLES │
└─────────────────────────────────────────────┘
                       │              ⌐S301
                       ▼
┌─────────────────────────────────────────────┐
│        PERFORM SYNDROME MEASUREMENT           │
└─────────────────────────────────────────────┘
                       │
                       ▼
┌─────────────────────────────────────────────┐
│                    LOOP                       │
└─────────────────────────────────────────────┘
                       │
                       ▼
┌─────────────────────────────────────────────┐
│                    LOOP                       │
│ NUMBER OF TIMES OF TRIALS < NUMBER OF SAMPLES │
└─────────────────────────────────────────────┘
                       │              ⌐S302
                       ▼
┌─────────────────────────────────────────────┐
│       INCREASE NOISE AND PERFORM SYNDROME     │
│                 MEASUREMENT                   │
└─────────────────────────────────────────────┘
                       │
                       ▼
┌─────────────────────────────────────────────┐
│                    LOOP                       │
└─────────────────────────────────────────────┘
                       │
                       ▼
                     END
```

# FIG.20

INFORMATION PROCESSING APPARATUS 10

PROCESSOR 10d

MEMORY 10c

COMMUNICATION INTERFACE 10a

HDD 10b

## INTERNATIONAL SEARCH REPORT

| International application No. |
| --- |
| **PCT/JP2023/009447** |

**A.    CLASSIFICATION OF SUBJECT MATTER**

*G06N 10/70*(2022.01)i
FI:    G06N10/70

According to International Patent Classification (IPC) or to both national classification and IPC

**B.    FIELDS SEARCHED**

Minimum documentation searched (classification system followed by classification symbols)

G06N10/70

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | 高城 翔矢 ほか, 適応的シンドローム測定による反復符号の量子誤り訂正, 情報処理学会研究報告, 09 October 2020, vol. 2020-QS-1, no. 3, pp. 1-7, ISSN 2435-6492, (TAKAGI, Shoya et al. Quantum Error Correction of Repetition Code with Adaptive Syndrome Measurement. IPSJ Technical Report.)<br>entire text, all drawings | 1-6 |
| A | UENO, Yosuke et al. QULATIS: A Quantum Error Correction Methodology toward Lattice Surgery. Proceedings of 2022 IEEE International Symposium on High-Performance Computer Architecture (HPCA) [online]. 17 May 2022, pp. 274-287, [retrieved on 19 May 2023], Retrieved from the Internet: <URL: https://ieeexplore.ieee.org/stamp/stamp.jsp?tp=&arnumber=9773181><br>entire text, all drawings | 1-6 |

☐ Further documents are listed in the continuation of Box C.        ☐ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **19 May 2023** | **30 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 679 337 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022069525 A
- JP 2022532469 A
- US 20190044543
- US 20220207406